## Europäisches Patentamt

## European Patent Office

## Office européen des brevets

(19)

(11) Veröffentlichungsnummer : **0 150 017**
**B1**

(12)

# EUROPÄISCHE PATENTSCHRIFT

(45) Veröffentlichungstag der Patentschrift :
27.07.88

(21) Anmeldenummer : 85100184.2

(22) Anmeldetag : 10.01.85

(51) Int. Cl.⁴ : **C 25 B 15/08, C 25 B 11/00**

(54) Elektrochemisches Verfahren zur Behandlung von flüssigen Elektrolyten.

(30) Priorität : 19.01.84 DE 3401636

(43) Veröffentlichungstag der Anmeldung :
31.07.85 Patentblatt 85/31

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
EP-A- 0 097 120
FR-A- 2 514 376
DECHEMA MONOGRAPHIEN, 1885-1913, Band 92, 1982, Weinheim-New York, A. WINSEL "Eloflux-Zellen für die Wasserelektrolyse, für Brennstoffzellen und ihre Einsatzmöglichkeiten bei der Energiespeicherung", S. 21-43

(73) Patentinhaber : HOECHST AKTIENGESELLSCHAFT
Postfach 80 03 20
D-6230 Frankfurt am Main 80 (DE)

(72) Erfinder : Tetzlaff, Karl-Heinz, Dr.
Mörikestrasse 6
D-6233 Kelkheim (Taunus) (DE)
Erfinder : Schmid, Dieter, Dr
Ostring 132
D-6231 Schwalbach/Taunus (DE)
Erfinder : Russow, Jürgen, Dr.
Am Schieferberg 45
D-6233 Kelkheim (Taunus) (DE)

EP 0 150 017 B1

## Beschreibung

Gegenstand der Erfindung ist ein Verfahren zur elektrochemischen Behandlung von flüssigen Elektrolyten in ungeteilten oder durch mindestens eine Trennwand geteilten elektrochemischen Zellen mit mindestens einer Gasdiffusionselektrode mit seitlich in Fließrichtung des Elektrolyten angeordnetem Gasraum und mindestens einer Gegenelektrode.

Das Verfahren eignet sich vorzugsweise für gasbildende und gasverbrauchende Faraday'sche Reaktionen oder Sekundärreaktionen innerhalb der elektrochemischen Zelle. Das Verfahren ist aber auch für solche elektrochemischen Reaktionen geeignet, bei denen keine Gase beteiligt sind.

Nach EP-A2-0 141 142 (veröffentlicht am 15.05.1985) ist bekannt, bei gasverbrauchenden Reaktionen, die Gasdiffusionselektrode als senkrechte Gefäßwand für den Elektrolyten zu benutzen und das erforderliche Gas an die Rückseite der Elektrode heranzuführen, bzw. abzuziehen. Um das Ausbringen von eventuell gebildeten Gasblasen aus dem Elektrolyten zu unterstützen, strömt der Elektrolyt von unten nach oben durch die Zelle. Der Differenzdruck von Gas und Elektrolyt sollte eigentlich an jedem Punkt der Gasdiffusionselektrode gleich sein. Infolge des Dichteunterschiedes von Gas und Flüssigkeit stellt sich jedoch ein mit der Höhe abnehmender hydrostatischer Druck ein. Bei großen Bauhöhen wie sie in technischen Anlagen üblich sind, kann es daher vorkommen, daß im oberen Teil Gas durch die Gasdiffusionselektrode in den Elektrolyten gelangt, während im unteren Teil Elektrolyt in den Gasraum eintritt. Beide Effekte stören den Reaktionsablauf und den Betrieb der Anlage.

Bei Reaktionen mit Gasentwicklung ist es nicht zwingend erforderlich, die Rückseite der Gasdiffusionselektrode elektrolytfrei zu halten. Man kann die Gasdiffusionselektroden daher wie beispielsweise eine Streckmetallelektrode senkrecht in den Elektrolyten eintauchen. Die Gasdiffusionselektrode kann auch fest mit einer Trennwand verbunden sein. Mindestens auf einer Seite der Gasdiffusionselektrode entstehen dann Gasblasen, die im Elektrolyten aufsteigen. Durch diese Zweiphasenströmung kommt es zu Druckschwankungen und Vibrationen. Elektroden und Trennwände werden außerdem durch den statischen Druck des Elektrolyten über die Bauhöhe unterschiedlich stark belastet. Man kann einige Effekte durch niedrige Bauhöhen und Vergrößerung des rückwärtigen Elektrolytraumes hinter der Gasdiffusionselektrode abmildern, aber nicht beseitigen.

Nach der französischen Patentanmeldung 2 514 376 ist ein Elektrolyseverfahren in durch Trennwände geteilten Elektrolysezellen bekannt, bei dem der Elektrolyt unter dem Einfluß der Schwerkraft als Film über die Oberfläche einer Elektrode geleitet wird. Unter anderem soll $CO_2$, das dem Elektrolyten zugeführt und von diesem absorbiert wird, elektrochemisch reduziert werden. Eventuell auftretendes Gas kann durch die Durchbrüche der darüber angeordneten Streckmetallelektrode entweichen. Wie das Verfahren für gasentwickelnde bzw. gasverzehrende technische Elektrolyseprozesse auszuführen ist, ist nicht erwähnt.

Die Aufgabe der Erfindung besteht nun darin, die hydrostatischen und hydrodynamischen Effekte weitgehend zu beseitigen.

Es wird daher ein Verfahren der eingangs geschilderten Art vorgeschlagen, in dem man den Elektrolyten unter Ausnutzung der Schwerkraft in dünner Schicht so durch die elektrochemische Zelle fließen läßt, daß die Gasdiffusionselektrode mindestens teilweise davon benetzt wird.

Gemäß weiterer Ausgestaltung des Verfahrens kann der Elektrolyt zwischen Gasdiffusionselektrode und Gegenelektrode fließen, wobei die Gegenelektrode eine geschlossene, eine durchbrochene oder eine mikroporöse Struktur aufweisen kann.

Der Elektrolyt kann auch zwischen Gasdiffusionselektrode und Trennwand oder zwischen zwei Trennwänden fließen. Der Elektrolyt kann auch zwischen einer Gegenelektrode mit durchbrochener oder geschlossener Struktur und einer Trennwand fließen. Bei geteilten elektrochemischen Zellen können mehrere verschiedene Elektrolyte eingesetzt werden. Bei geringem Elektrolytbedarf kann der Elektrolyt mindestens teilweise innerhalb der Trennwand oder der Gasdiffusionselektrode fließen.

Der Elektrolyt kann mindestens teilweise auf der Rückseite der Gasdiffusionselektrode fließen oder nur an den seitlichen Bereichen einer streifenförmigen Gasdiffusionselektrode. Auch eine allseitige Benetzung der Gasdiffusionselektrode ist möglich. Die Benetzung der Gasdiffusionselektrode kann auch durch ein besonderes Kapillarsystem erfolgen, das den Elektrolyttransport zwischen der Gasdiffusionselektrode und dem an einer anderen Zellenstruktur oder dem Kapillarsystem herabfließenden Elektrolyten gewährleistet.

Der Elektrolyt kann auch in Kanälen fließen, die durch die geometrische Form der Gasdiffusionselektrode, der Trennwand oder der Abstandshalter geschaffen werden. Die Kanäle können auch so gestaltet sein, daß der Elektrolyt gezwungen wird, mäanderförmig zu fließen.

Durch Einstellen einer Druckdifferenz zwischen den Räumen vor und hinter der Gasdiffusionselektrode kann der Elektrolyt auch veranlaßt werden, mindestens teilweise quer durch die Gasdiffusionselektrode zu fließen. In ähnlicher Weise kann auch eine Anordnung aus ein bis zwei Gasdiffusionselektroden und einer als Diaphragma ausgebildeten Trennwand quer vom Elektrolyten durchströmt werden, wenn auf beiden Seiten einer solchen Anordnung ein unterschiedliches Druckniveau eingestellt wird.

Gemäß weiterer Ausgestaltung kann der Elektrolyt auch quer durch ein Zellenpaket strömen, das aus mehreren Diaphragmen und mehreren Gasdiffusionselektroden besteht, wenn der Raum vor und hinter diesem Zellenpaket, auf ein unterschiedliches Druckniveau eingestellt wird. Die prinzipielle Arbeitsweise eines solchen, als ELO-FLUX-Zelle bekannten Zellenpaketes geht beispielsweise aus DECHEMA-Monographien Band 92, 1885... 1913 ; Seite 21 bis 43, Verlag Chemie - Weinheim - New York - 1982. Durch die Anwendung des erfindungsgemäßen Verfahrens auf die endständigen Gasdiffusionselektroden ist der Elektrolytdruck in den Poren weitgehend unabhängig von der Bauhöhe, so daß man auch diesen Zellentyp sehr groß bauen kann.

Man kann den Differenzdruck vor und hinter einer Gasdiffusionselektrode auch hydrodynamisch dadurch verändern, daß man den Strömungsquerschnitt des vor der Gasdiffusionselektrode fließenden Elektrolyten ein- oder mehrmals verändert. Diese Veränderung kann auch außerhalb der Gasdiffusionselektrode liegen. Man kann damit eine Druckdifferenz zwischen Elektrolyt und Gas auch dann erzeugen, wenn sich Elektrolyt und Gas am Ein- und Auslauf berühren. Man kann diese Veränderung auch dazu benutzen, den Elektrolyten teilweise quer durch eine geeignete Gasdiffusionselektrode fließen zu lassen.

Nach einer weiteren Ausgestaltung der Erfindung kann man als Gegenelektrode eine Elektrode mit durchbrochener Struktur verwenden und den Elektrolyten unter Ausnutzung der Schwerkraft so an der durchbrochenen Elektrode herabfließen lassen, daß seitlich zur Fließrichtung ein Gasraum entsteht. Besonders vorteilhaft ist diese Ausgestaltung der Erfindung bei geteilten elektrochemischen Zellen. Beispielsweise läßt sich bei der Elektrolyse von Alkalichlorid eine Sauerstoff verzehrende Kathode und eine Chlor entwickelnde durchbrochene Anode zusammen in einer Membranzelle verwenden. Diese Zelle ist trotz der Blasenentwicklung im Anolyten weitgehend frei von statischen Drücken, Druckschwankungen und Vibrationen.

Nach einer weiteren Ausgestaltung der Erfindung kann man bei einer geteilten elektrochemischen Zelle eine Gegenelektrode mit geschlossener Struktur verwenden und auf der Rückseite der Gegenelektrode einen Gasraum anordnen und den Elektrolyten unter Ausnutzung der Schwerkraft in dünner Schicht zwischen Gegenelektrode und Trennwand fließen lassen. Man kann auf diese Weise statische Druckeinwirkungen auf die Trennwand und die Gegenelektrode vermeiden. Es kann eine von der Bauhöhe unabhängige beliebige Druckdifferenz zwischen diesem Gasraum und dem Elektrolyten eingestellt werden.

Unter einer Trennwand ist eine Folie zu verstehen, die Anolyt und Katholyt und/oder die beteiligten Gase voneinander trennt. Sie kann aus einer Kationen- oder Anionenaustauschermembran oder aus porösem Material bestehen. Die Trennwand kann auch mit der Gasdiffusionselektrode oder einer durchbrochenen Elektrode eine Einheit bilden. Die Gasdiffusionselektrode kann durch ihren mikroporösen Aufbau die Funktion einer Gastrennung übernehmen.

Unter einer Gasdiffusionselektrode ist eine Elektrode mit sehr kleinen Öffnungen oder Poren zu verstehen, die dem Gas eine größere Kontaktfläche bieten als der projezierten makroskopischen Fläche entspricht. Die Gasdiffusionselektrode kann, wie an sich bekannt, aus mehreren Schichten aufgebaut sein. Diese Schichten können auch die Funktion eines Diaphragmas ganz oder teilweise übernehmen. Durch entsprechende Materialwahl kann die Benetzungseigenschaft der Elektrodenoberfläche beeinflußt werden. Durch entsprechende Schichtung kann auch die Eindringtiefe des Elektrolyten beeinflußt werden. Eine flüssigkeitsdichte Schicht kann auch beispielsweise aus einer feinporösen PTFE-Folie bestehen, die die Rückseite der Gasdiffusionselektrode abschließt. Die Eindringtiefe des Elektrolyten läßt sich aber auch durch eine entsprechende Druckdifferenz zwischen Elektrolyt- und Gasraum beeinflussen.

Die Elektroden und Trennwände sollten im Hinblick auf einen einfachen technischen Aufbau im wesentlichen senkrecht stehen. Möglich ist jedoch jeder Winkel der gegenüber der Horizontalen größer als 0° und kleiner als 180° ist.

Elektroden und Trennwände können eben oder gekrümmt sein, beispielsweise wellig oder zu Rohren geformt. Anordnungen aus mehreren Elektroden und Trennwänden können sowohl bipolar als auch monopolar elektrisch zusammengeschaltet sein.

Soll der Elektrolyt zwischen zwei als hydraulisch dicht anzusehenden Wänden fließen, wie beispielsweise zwischen den Trennwänden, den Gasdiffusionselektroden, einer Gasdiffusionselektrode und einer Trennwand oder einer geschlossenen Elektrode, so ist zu beachten, daß man immer genügend Elektrolyt anbietet, damit weder Gasblasen eingesaugt werden, noch ein unerwünschter hydrostatischer Überdruck entsteht. Die Druckverhältnisse sollen an einem idealisierten Fall beispielsweise erläutert werden : Der Elektrolyt soll aus einer flachen Verteilerrinne, die mit dem rückwärtigen Gasraum einer Gasdiffusionselektrode einen gasseitigen Druckausgleich besitzt, in den Spalt zwischen Gasidffusionselektrode und Trennwand hineinfließen, und am unteren Ende der Elektrode in den rückwärtigen Gasraum ausfließen. Es wird ferner angenommen, daß sich die Stoffeigenschaften, das Elektrolytvolumen und die Spaltweite mit der Bauhöhe nicht ändern. Die Strömungsgeschwindigkeit stellt sich dann gerade so ein, daß die potentielle Energie des Elektrolyten durch Reibungsverlust aufgezehrt wird. Der Differenzdruck zum rückwärtigen Gasraum ist daher unabhängig von der Bauhöhe konstant. Unter den obigen Annahmen ist der Differenzdruck praktisch Null. In der Praxis werden sich das Elektrolyt-Volumen und die Stoffeigenschaften natürlich ändern. Die Auswirkung auf den Druckverlauf ist aber im allgemeinen tolerierbar. Man kann aber auch den Strömungsquerschnitt für den Elektrolyten als Funktion der Bauhöhe für den Auslegungsfall so verändern, daß auch hier die potentielle Energie des Elektrolyten je Einheit der Strömungslänge gerade durch Reibungsverluste aufgezehrt wird.

Die wünschenswerte Unabhängigkeit des Differenzdruckes von der Höhe erreicht man also dadurch, daß man am Einlauf und am Auslauf des Elektrolyten den gleichen Druck aufprägt. Selbstverständlich kann der Elektrolytdruck sich vom Gasdruck im rückwärtigen Raum hinter der Gasdiffusionselektrode unterscheiden. Die erforderlichen Maßnahmen zur Sicherstellung getrennter Druckräume sind an sich bekannt. Die Geschwindigkeit des Elektrolyten im Spalt sollte deutlich unter 4 m/s liegen, vorzugsweise bis 1 m/s, damit die Energie hauptsächlich durch Reibungsverluste aufgezehrt werden kann und nicht als Geschwindigkeitsenergie am Auslauf im Elektrolyten verbleibt. Typische Spaltbreiten für dünnflüssige Elektrolyte liegen zwischen 0,1 und 1 mm. Bei mäanderförmigen Umlenkungen und bei Anwendung von Abstandshaltern mit erhöhtem Strömungswiderstand sind die Spaltbreiten größer. Man wird im allgemeinen denjenigen Durchfluß wählen, der für den Stoffaustausch oder zur Wärmeabfuhr gewünscht wird. Die Elektrolytgeschwindigkeit läßt sich in sehr weiten Grenzen durch den Spaltabstand, durch die Art der zwischengelegten Abstandshalter und durch die Form und Art von Elektroden und Trennwänden variieren.

Das erfindungsgemäße Verfahren ist für alle elektrochemischen Prozesse mit flüssigen Elektrolyten geeignet, die mit Gasdiffusionselektroden betrieben werden können. Es kann sich dabei um gasbildende oder gasverbrauchende Prozesse handeln. Dabei kommen nicht nur Faradaysche Reaktionen in Betracht, sondern auch solche, bei denen Gase in einer Sekundärreaktion beteiligt sind. Man kann das erfindungsgemäße Verfahren auch auf solche Prozesse anwenden, bei denen keine Gase beteiligt sind. In diesen Fällen führt man ein Inertgas ein. Anstelle der üblichen Elektroden mit geschlossener Struktur setzt man dann Gasdiffusionselektroden ein, die nach dem erfindungsgemäßen Verfahren teilweise quer durchströmt werden können. Dadurch kann die große innere Oberfläche zur Reduzierung der Überspannung ausgenutzt werden. Bei diffusionsgehemmten Reaktionen erhöht sich auch die Grenzstromdichte.

Bei geteilten elektrochemischen Zellen kann man das vorgeschlagene Verfahren auf beide Zellenhälften anwenden oder nur auf eine. Man kann beide Zellenhälften mit Gasdiffusionselektroden betreiben oder als Gegenelektrode eine Elektrode mit durchbrochener oder mit geschlossener Struktur verwenden.

Man kann also stets dafür sorgen, daß auch bei geteilten elektrochemischen Zellen die negativen hydrostatischen und hydrodynamischen Effekte eliminiert werden. Prozeßbedingte Vibrationen und Druckschwankungen treten nicht auf. Durch die frühzeitige Phasentrennung von Elektrolyt und Gas in der Elektrode oder in enger Nachbarschaft zur Elektrode, kann die Zellentiefe bei Elektrolysezellen stark reduziert werden, in der Regel auf wenige Millimeter. Besondere Apparate zur Phasentrennung sind oft entbehrlich, da die Phasen schon beim Verlassen der Zellen praktisch getrennt sind. Die mechanische Belastung von Elektroden, Trennwänden und sonstigen Zellenstrukturen ist bei Anwendung des erfindungsgemäßen Verfahrens außerordentlich gering. Elektroden und Trennwände können daher dünner sein. Das ist ein wichtiger Beitrag zur Senkung der ohmschen Spannungsverluste und zur Erhöhung der Betriebssicherheit. Durch den Fortfall von Vibrationen und Druckschwankungen wird auch das Aneinanderreiben von Elektroden und Trennwänden vermieden. Die empfindlichen Schichten auf Trennwänden und Elektroden werden geschont. Auch eine Lockerung des Gefüges von Gasdiffusionselektroden wird vermieden. Die Elektroden und Trennwände erreichen eine längere Einsatzdauer. Der Abstand von Gasdiffusionselektrode zur Gegenelektrode oder zur Trennwand wird in der Regel so klein, daß man praktisch von einem Nullabstand sprechen kann. Durch das vorgeschlagene Verfahren kann die Gasdiffusionselektrode besser auf ihre eigentliche Aufgabe hin entwickelt werden, denn die den Stofftransport hemmende feinporöse Gassperrschicht braucht nicht mehr für einen weiten Druckbereich ausgelegt zu werden. Hervorzuheben ist, daß die Bauhöhe elektrochemischer Zellen praktisch nicht mehr begrenzt ist, was für den industriellen Einsatz von besonderer Bedeutung ist. Das erfindungsgemäße Verfahren läßt sich auch dort einsetzen, wo der eigentliche Elektrolyt zwischen Anode und Kathode ein Festkörper ist, beispielsweise eine Ionenaustauschermembran (SPE-Verfahren). Der flüssige Elektrolyt dient dann nur noch der Zuführung, bzw. dem Abtransport der beteiligten Stoffe oder wird zur Wärmeregulierung benutzt.

Das erfindungsgemäße Verfahren ist auch für elektrochemische Zellen geeignet, die mehrere Trennwände zwischen einem Elektrodenpaar besitzen, wie beispielsweise Zellen für die Elektrodialyse von Meerwasser.

Das vorgeschlagene Verfahren ist grundsätzlich für alle elektrochemischen Verfahren geeignet für die sich mikroporöse Elektroden mit ausreichender Standzeit herstellen lassen. Als Beispiele seien genannt :

— Alkalichlorid-Elektrolyse
— Wasser-Elektrolyse
— Brennstoffzellen
— Elektrodialyse
— organische Synthesen
— Redox-Systeme zur elektrochemischen Energieerzeugung und -speicherung

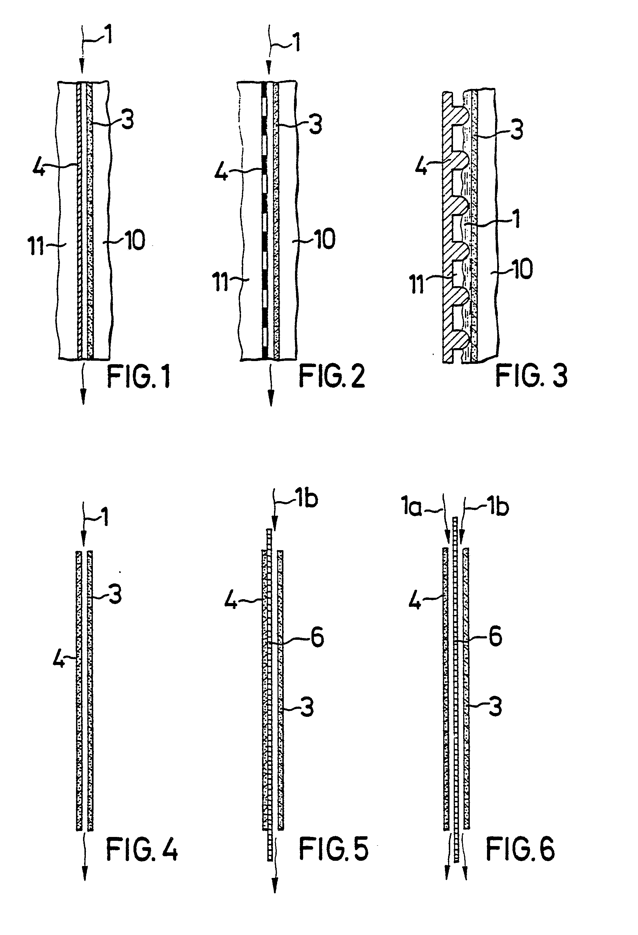

Die Erfindung wird anhand der Fig. 1 bis 31 beispielsweise beschrieben. Es werden in einer stark schematisierten Weise nur diejenigen Elemente dargestellt, die zum Verständnis wichtig sind. Falls nicht ausdrücklich anderes im Text erwähnt ist, handelt es sich immer um Ausschnitte. Das Gehäuse, die Zu- und Abführleitungen und die Elektrolyt-Verteil- und -Sammeleinrichtungen wurden nicht bildlich dargestellt, da sie jedem Fachmann an sich bekannt sind. Die an sich ebenfalls bekannten Abstandshalter zwischen Elektroden und Tennwänden sind nur dort dargestellt, wo ihrer Form eine besondere Bedeutung zukommt. Der Einfachheit halber sind alle gezeigten Anordnungen vertikal gezeichnet. Der seitlich zur Hauptflußrichtung entstehende Gasraum grenzt unmittelbar an die Elektroden oder an den in dünner Schicht fließenden Elektrolyten an. Eine nähere Bezeichnung erfolgt nur in Sonderfällen. Ob eine Anordnung für gaserzeugende Reaktionen oder für gasverbrauchende Reaktionen geeignet ist, ist an sich jedem Fachmann klar, nur in besonderen Fällen wird darauf näher eingegangen.

Fig. 1 zeigt eine Gasdiffusionselektrode 3 und eine Elektrode 4 mit geschlossener Struktur. Der Elektrolyt 1 fließt im Spalt zwischen den Elektroden 3 und 4. Auf der Rückseite der Elektroden 3 und 4 sind die Gasräume 10 und 11 angeordnet.

Fig. 2 zeigt eine Gasdiffusionselektrode 3 und eine durchbrochene Elektrode 4. Der Elektrolyt 1 fließt vorzugsweise im Spalt zwischen den Elektroden 3 und 4. Der Elektrolyt 1 kann die durchbrochene Elektrode 4 ganz oder teilweise benetzen, auch von der Rückseite. Die Öffnungen in der durchbrochenen Elektrode 4 sollen größer sein als die im Elektrolyt entstehender Gasblasen, damit die Öffnung nicht durch einzelne Blasen blockiert werden. Geeignet sind beispielsweise Lochbleche, Streckmetalle, Drahtgewebe, Elektroden aus einzelnen Stäben oder Blechstreifen und Elektroden mit eingearbeiteten Vertiefungen, in denen das Gas abgezogen werden kann.

Fig. 3 zeigt einen Horizontalschnitt mit durchbrochener Elektrode 4, die hier als Elektrode mit eingearbeiteten Vertiefungen dargestellt ist. Diese Elektrode 4 kann gleichzeitig die Funktion einer bipolaren Trennwand übernehmen. Der Gasraum 11 befindet sich also innerhalb der Elektrode 4. Trägt die Gasdiffusionselektrode 3 an der Vorderseite eine isolierende Schicht, können die beiden Elektroden 3 und 4 direkt aufeinanderliegen. Man kann den isolierenden Abstand natürlich auch mit Abstandshaltern fixieren. Der Elektrolyt 1 läuft in Kanälen nach unten. Die Lage des Elektrolyten kann man durch die Benetzungseigenschaften der durchbrochenen Elektrode 4 oder durch leichtes Schrägstellen beeinflussen. Der zur Gasdiffusionselektrode 3 gehörende Gasraum 10 grenzt unmittelbar an die Gasdiffusionselektrode 3 an.

Fig. 4 zeigt zwei Gasdiffusionselektroden 3 und 4, die in geringem Abstand zueinander angeordnet sind. Der Elektrolyt 1 fließt durch diesen Spalt und benetzt beide Elektroden.

Fig. 5 zeigt eine Anordnung mit einer Trennwand 6 und zwei Gasdiffusionselektroden 3 und 4. Der Elektrolyt 1b fließt im Spalt zwischen Trennwand 6 und Gasdiffusionselektrode 3. Die Trennwand 6 kann aus einem Diaphragma bestehen. Die Elektrode 4 wird dann direkt vom Elektrolyten 1b benetzt. Die Trennwand 6 kann aber auch aus einer Ionenaustauschermembran bestehen.

Für den Fall, daß die Ionenaustauschermembran Ionen transportiert, die zu gasförmigen Produkten führen oder wenn gasförmige Produkte an die Elektrode 4 herangeführt werden, bleibt die Elektrode 4 trocken. Andere Produkte müssen jedoch unter mindestens teilweiser Benetzung durch einen weiteren Elektrolyten herantransportiert oder abgezogen werden.

Fig. 6 zeigt eine Anordnung mit einer mittig angeordneten Trennwand 6 und zwei Gasdiffusionselektroden 3 und 4, die durch die beiden Elektrolyte 1a und 1b benetzt werden.

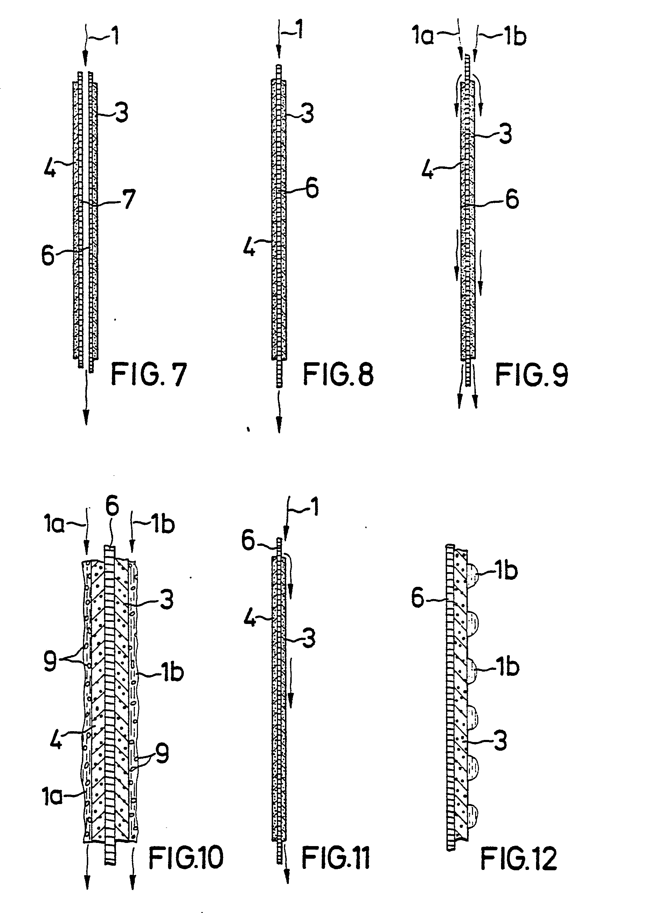

Fig. 7 zeigt eine Anordnung mit zwei Trennwänden 6 und 7 und zwei Gasdiffusionselektroden 3 und 4. Der Elektrolyt 1 fließt zwischen den Trennwänden. Die Trennwände 6 und 7 können aber auch, wie bereits erwähnt, integraler Bestandteil der Gasdiffusionselektroden 3 und 4 sein. Diese Anordnung ist für Brennstoffzellen und für die Wasser-Elektrolyse geeignet.

Fig. 8 zeigt eine Anordnung, bei der der Elektrolyt 1 innerhalb der Trennwand 6 fließt. Die Trennwand 6 kann homogen aus einem porösen Material bestehen oder heterogen aus mehreren unterschiedlich strukturierten Schichten aufgebaut sein. Beispielsweise kann man sich diese Trennwand 6 aus der Fig. 7 entstanden denken, wenn man sich vorstellt, daß die dortigen Trennwände 6 und 7, die gegebenenfalls durch Abstandshalter gestützt sind, so eng aufeinanderliegen, daß man praktisch von einer Einheit ausgehen kann, besonders dann, wenn ein fester mechanischer Verbund zustandegekommen ist. Die Anordnung ist vorzugsweise für geringen Elektrolytdurchsatz geeignet, beispielsweise bei Wasserstoff-Sauerstoff-Brennstoffzellen, die mit hochkonzentrierten wäßrigen Elektrolyten oder mit Schmelzen als Elektrolyt arbeiten. Der Elektrolyt 1 fließt dann lediglich zur Aufrechterhaltung einer guten Leitfähigkeit durch die Trennwand 6. Das gebildete Wasser verläßt die Brennstoffzelle überwiegend gasförmig.

Fig. 9 und Fig. 10 zeigen zwei Gasdiffusionselektroden 3 und 4, die unmittelbar auf der Trennwand 6 aufliegen oder mechanisch verbunden sind. Fig. 10 ist ein vergrößerter Ausschnitt aus Fig. 9. Die Elektrolyte 1a und 1b sollen hier beispielsweise die Rückseiten der Gasdiffusionselektroden 3 und 4 ganz bedecken. Es soll also an beiden Elektroden eine gaserzeugende Reaktion stattfinden. Das in den Gasdiffusionselektroden gebildete Gas erzeugt in dem in dünner Schicht herabfließenden Elektrolyten Gasblasen 9, die an der Phasengrenze zum Gasraum aufplatzen. Für die Wasser-Elektrolyse kann man problemlos mit einem Diaphragma als Trennwand 6 arbeiten. Bei der Alkalichlorid-Elektrolyse vorzugsweise eine Kationenaustauschermembran verwenden.

Fig. 11 zeigt eine Anordnung wie in Fig. 9 bereits dargestellt und beschrieben. Die Fig. 11 soll jedoch den Betrieb bei einer Wasser-Elektrolyse mit protonenleitender Ionenaustauschermembran als Trennwand 6 veranschaulichen. Es ist nur ein Elektrolyt 1 erforderlich, weil der gebildete Wasserstoff die Gasdiffusionselektrode 4 gasförmig verläßt.

Fig. 12 zeigt einen Horizontalschnitt mit Trennwand 6 und Gasdiffusionselektrode 3. Die Gegenelektrode ist nicht dargestellt. Die Rückseite der Gasdiffusionselektrode 3 besitzt dicht nebeneinander angeordnete Streifen mit gut benetzbarer — und weniger gut benetzbarer Oberfläche. Der Elektrolyt 1b läuft dann in Strähnen bevorzugt an den gut benetzbaren Teilen der Oberfläche. Der Elektrolytfluß muß nicht gleichmäßig sein. Es können sich beispielsweise Wellen bilden oder der Elektrolyt 1b kann in Tröpfchen in Kontakt zur Oberfläche herunterfließen, wobei Teile der weniger gut benetzbaren Oberfläche zeitweilig überdeckt werden können. Anstelle der hydrophoben und hydrophilen Streifen können auch andere Muster vorgesehen werden. Ein Teil der Oberfläche sollte zumindest zeitweilig für den gasseitigen Stoffaustausch zur Verfügung stehen. Man kann den Elektrolyten 1b auch dadurch am Überfließen der gesamten Oberfläche hindern, daß man ihn durch poröse, hydrophobe Streifen abdrängt, die auf der Rückseite der Gasdiffusionselektrode 3 angeordnet sind. Diese Streifen können so dick sein, daß der Elektrolyt 1b gleichsam in Kanälen fließt. Die Gasdiffusionselektrode 3 sollte biporos aufgebaut sein. Das Gas kann dann beispielsweise in einem zusammenhängenden System grober Poren transportiert werden und der Elektrolyt 1b in einem zusammenhängenden System feiner Poren. Die dargestellte Anordnung ist in Verbindung mit einer Gegenelektrode sowohl für gasverbrauchende als auch für gaserzeugende Reaktionen einsetzbar.

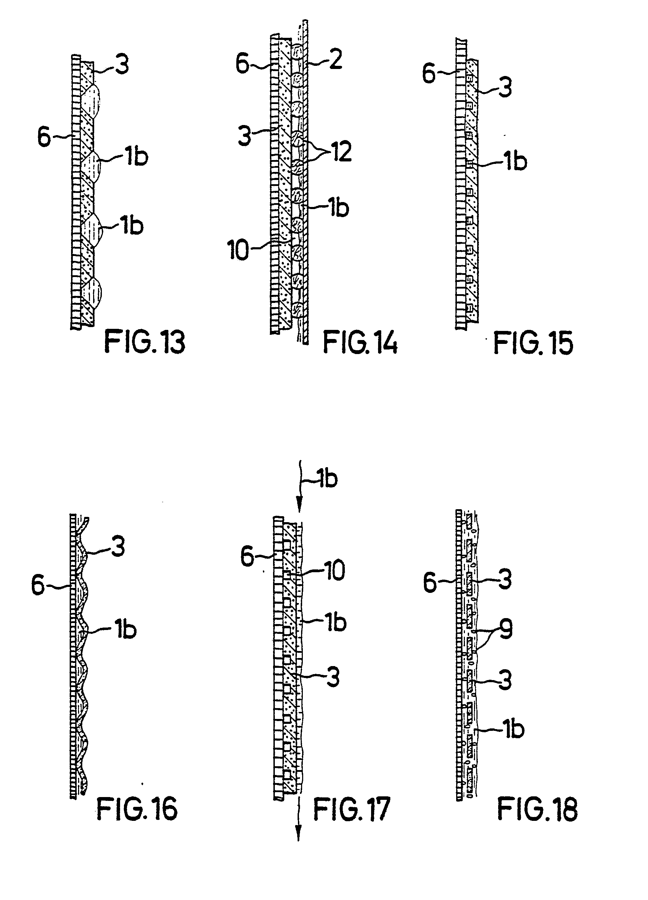

Fig. 13 zeigt einen Horizontalschnitt. Die Funktionsweise und der Aufbau entspricht weitgehend der Fig. 12, die Laufbahnen des Elektrolyten 1b sind hier jedoch in die Gasdiffusionselektrode 3 eingeschnitten.

Fig. 14 zeigt einen Horizontalschnitt mit Gasdiffusionselektrode 3 und Tennwand 6. Die Gegenelektrode ist hier nicht dargestellt. Der Elektrolyt 1b fließt an einer Wand 2 herab, die beispielsweise eine bipolare Trennwand sein kann. Die Benetzung der Gasdiffusionselektrode 3 erfolgt über ein Kappillarsystem 12, das beispielsweise aus einem hydrophilen porösen oder faserigen Material gefertigt sein kann. Damit der Elektrolyt 1b in seiner dargestellten Lage verbleibt, ist eine leichte Schräglage hilfreich. Der Gasraum 10 befindet sich zwischen Gasdiffusionselektrode 3 und Elektrolyt 1b.

Fig. 15 zeigt einen Horizontalschnitt ohne Gegenelektrode. Der Elektrolyt 1b läuft in eingearbeiteten Kanälen der Gasdiffusionselektrode 3. Die Kanäle sind hier durch die Trennwand 6 begrenzt. Sie können aber auch vollständig in die Elektrode eingearbeitet sein.

Fig. 16 zeigt einen Horizontalschnitt ohne Gegenelektrode. Der Elektrolyt 1b fließt hier in Kanälen, die durch die wellenförmig geformte Gasdiffusionselektrode 3 gebildet werden. Die Kanäle werden durch die Trennwand 6 begrenzt. Um den Stoffaustausch in den Zwickeln zu verbessern, kann ein kleiner Abstandshalter vorgesehen werden.

Fig. 17 zeigt eine Anordnung ohne Gegenelektrode mit einem innerhalb der Gasdiffusionselektrode 3 angeordneten Gasraum 10, der hier von der Trennwand 6 begrenzt wird. Der Elektrolyt 1b fließt auf der Rückseite der Gasdiffusionselektrode 3. Anordnungen mit innenliegendem Gasraum lassen sich zu einem sehr kompakten Zellenpaket zusammenfügen. Der Elektrolyt 1b kann dann in dünner Schicht zwischen zwei Elektroden fließen.

Fig. 18 zeigt einen Horizontalschnitt ohne Gegenelektrode mit einer streifenförmigen Gasdiffusionselektrode 3, die vom Elektrolyten 1b vollständig benetzt wird. Diese Anordnung ist selbstverständlich vorzugsweise für gaserzeugende Reaktionen geeignet. Die Gasdiffusionselektrode 3 kann durch eine, nicht an der Reaktion beteiligte feinporöse Schicht das gebildete Gas 9 bevorzugt an der Rückseite abgeben.

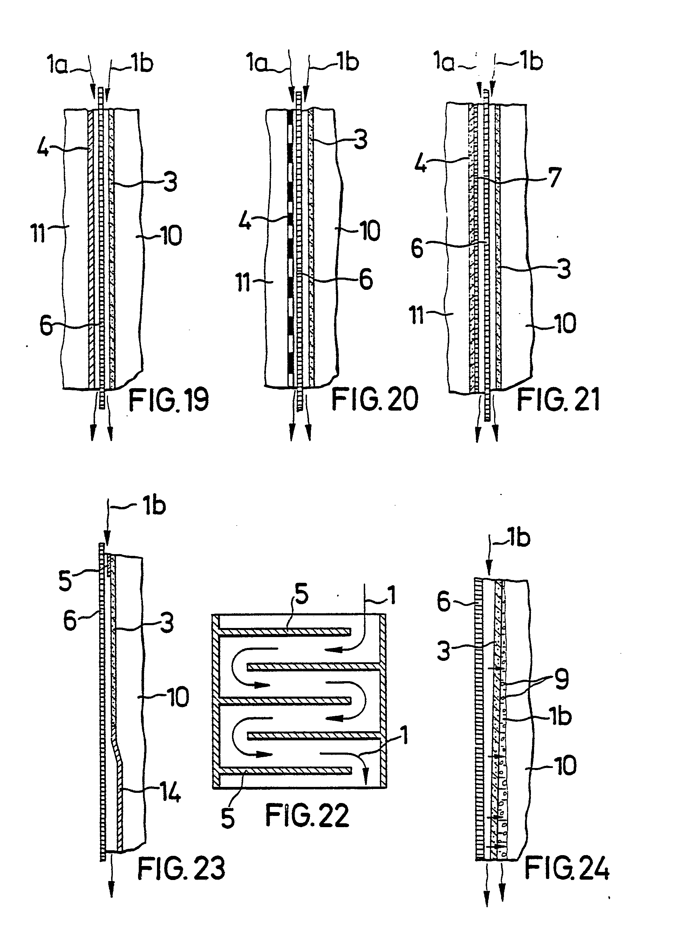

Fig. 19 zeigt eine Anordnung mit einer Gasdiffusionselektrode 3 und einer Gegenelektrode 4, die eine geschlossene Struktur aufweist. Der Elektrolyt 1a fließt zwischen Gegenelektrode 4 und Trennwand 6. Der Elektrolyt 1b fließt zwischen Gasdiffusionselektrode 3 und Trennwand 6. Der Gasraum 10 grenzt unmittelbar an die Gasdiffusionselektrode 3. Wie bereits zuvor erläutert, werden die Bauteile 3, 4 und 6 nicht mit dem hydrostatischen Druck der beiden Elektrolyte belastet — auch dann nicht, wenn die Elektrolyte unterschiedliche Dichten aufweisen und die Bauhöhe sehr groß ist. Um auch von der Rückseite der Gegenelektrode 4 kommende hydrostatische Belastungen zu vermeiden, sollte auch an der Rückseite der Elektrode 4 ein Gasraum 11 angeordnet sein. Man erreicht so eine beträchtliche Einsparung wertvoller Materialien und kann die Zellenkonstruktion in Leichtbauweise ausführen.

Fig. 20 zeig eine Anordnung mit Gasdiffusionselektrode 3, einer Trennwand 6 und einer durchbrochenen Elektrode 4 als Gegenelektrode. Der Elektrolyt 1b fließt zwischen Trennwand 6 und Gasdiffusionselektrode 3. Der Elektrolyt 1a fließt teilweise auf der Rückseite der Elektrode 4 und teilweise zwischen Elektrode 4 und Trennwand 6. Diese Anordnung ist für Gasentwicklung an der durchbrochenen Elektrode 4 geeignet. Es bildet sich beim Betrieb ein blasenhaltiger Elektrolytfilm aus. Die Gasblasen gelangen auf kurzem Wege an den unmittelbar angrenzenden Gasraum 11 und geben ihren Gasinhalt durch Aufplatzen ab.

Bei den technisch üblichen Stromdichten wird nur ein kleiner Gasanteil durch Diffusion an der Phasengrenze zum Gasraum 11 direkt in diesen Gasraum 11 entweichen.

Fig. 21 zeigt eine Anordnung mit zwei Gasdiffusionselektroden 3 und 4 und einer Trennwand 6. Auf der Vorderseite der Gasdiffusionselektrode 4 ist eine weitere Trennwand 7 angeordnet. Die Trennwand 7 kann aber auch ein integraler Bestandteil der Gasdiffusionselektrode 3 sein. Wie an sich bekannt, ist dafür eine feinporöse Schicht aus einem Werkstoff zu bevorzugen, der nicht an der Reaktion teilnimmt. Das können auch Metalle mit einer entsprechend hohen Überspannung sein. Der Elektrolyt 1a fließt zwischen den beiden Trennwänden 6 und 7. Der Elektrolyt 1b fließt zwischen der Trennwand 6 und der Gasdiffusionselektrode 3. Auf den Rückseiten der Gasdiffusionselektroden 3 und 4 befinden sich die Gasräume 10 und 11. Mit dieser Anordnung lassen sich sowohl gaserzeugende als auch gasverbrauchende Reaktionen durchführen. Es lassen sich auch beispielsweise an der Gasdiffusionselektrode 3 gasverbrauchende und an der Gasdiffusionselektrode 4 gaserzeugende Reaktionen durchführen.

Fig. 22 zeigt schematisch einen mäanderförmigen Elektrolytfluß an. Die mäanderförmige Kanalbildung kann durch Abstandshalter 5, aber auch durch entsprechende Formgebung von Elektroden oder Trennwänden erzwungen werden. Für den Fall, daß der Elektrolyt 1 zwischen hydraulisch dichten Wänden, beispielsweise Trennwänden oder Gasdiffusionselektroden fließt, sollten die Kanäle vollständig mit dem Elektrolyten 1 ausgefüllt werden. Ein Druckausgleich der einzelnen Kanäle zu irgentwelchen Gasräumen ist nicht erforderlich, weil auch hier, ähnlich wie zuvor, für nichtmäanderförmigen Fluß beschrieben, die potentielle Energie des Elektrolyten 1 auf seinem Fließweg stetig infolge Flüssigkeitsreibung abgebaut wird. Wenn man die Breite der querverlaufenden Kanäle klein wählt, kann man die geringen statischen Druckunterschiede zwischen dem oberen Bereich und dem unteren Bereich eines Kanals vernachlässigen. Durch entsprechende Gestaltung des Kanalquerschnitts lassen sich Strömungsgeschwindigkeit, Verweilzeit und der Abstand zu Elektroden und Trennwänden in weiten Grenzen variieren.

Fig. 23 soll erläutern, wie der Differenzdruck zwischen Elektrolyt 1b und Gasraum 10 durch hydrodynamische Effekte beeinflußbar ist. Wie bereits dargelegt ist dieser Differenzdruck unabhängig von der Bauhöhe, wenn sich der Abstand zwischen den Begrenzungswänden des herabfließenden Elektrolyten nicht ändert, und die Fließeigenschaften und Durchflußmenge praktisch konstant bleiben. Als Begrenzungswände sind hier eine Gasdiffusionselektrode 3 und eine Trennwand 6 dargestellt. Wenn man nun am Einlauf des Elektrolyten 1b eine Drosselstelle anbringt, beispielsweise durch eine Querschnittsänderung des Abstandshalters 5, so entsteht unmittelbar hinter der Drosselstelle ein Unterdruck. Bleibt nun der Abstand der Begrenzungswände 3 und 6 konstant, wird der Unterdruck bis zum Austritt des Elektrolyten 1b stetig abgebaut. Bei diesem Beispiel wird vorausgesetzt, daß der Elektrolyt 1b am Ein- und Auslauf in direktem Kontakt zum Gasraum 10 steht. Will man nun den durch Drosselung eingestellten Unterdruck über die Höhe konstant halten, so kann man den Stömungsquerschnitt im unteren Bereich erweitern, beispielsweise durch eine feste Wand 14, die sich an die Gasdiffusionselektrode 3 anschließt. Da durch den erweiterten Spalt die potentielle Energie des Elektrolyten auf seinem Fließweg nicht mehr vollständig als Flüssigkeitsreibung abgebaut wird, entsteht ein Unterdruck. Man kann nun den durch die Drosselstelle und die Querschnittserweiterung verursachten Unterdruck auf den gleichen Wert einstellen und erhält so über die gesamte Bauhöhe der Gasdiffusionselektrode 3 einen konstanten Differenzdruck zum Gasraum 10. Man kann die Drosselstelle auch unten und die Querschnitterweiterung auch oben anordnen. Es stellt sich dann ein von der Bauhöhe unabhängiger Überdruck zum Gasraum ein. Durch die Ausnutzung dieser Effekte kann die Zellenkonstruktion vereinfacht werden. Dabei kann trotzdem der günstigste Differenzdruck für die Gasdiffusionselektrode gewählt werden.

Fig. 24 zeigt eine Anordnung ohne Gegenelektrode mit einer gaserzeugenden Gasdiffusionselektrode 3 und einer Trennwand 6. Der Elektrolyt 1b fließt durch einen stetig enger werdenden Spalt. Dadurch entsteht ein hydrostatischer Überdruck. Mann kann nun diesen Überdruck dazu benutzen, den Elektrolyten teilweise quer durch die Gasdiffusionselektrode 3 strömen zu lassen und so für einen Abbau des statischen Druckes sorgen. Die vier kurzen Pfeile sollen die Durchströmung der Gasdiffusionselektrode 3 andeuten. Dadurch lassen sich Konzentrationsgradienten innerhalb der Gasdiffusionselektrode weitgehend vermeiden. Es lassen sich daher sehr hohe Stromdichten anwenden. Da die Verengung des Spaltes zwischen Gasdiffusionselektrode und Trennwand auf Bruchteile eines Millimeters begrenzt werden kann, ist der unterschiedliche Ohmsche Spannungsabfall vernachlässigbar. Anstelle des enger werdenden Spaltes kann man auch Abstandshalter einsetzen, deren Strömungswiderstand nach unten hin zunimmt. Bei gaserzeugenden Reaktionen sollte die Gasdiffusionselektrode 3 so aufgebaut sein, daß das Gas auf der Rückseite austritt. Die Gasblasen 9 können dann leicht ihren Gasinhalt an den angrenzenden Gasraum 10 abgeben.

Man kann die Strömungsrichtung des quer durch die Gasdiffusionselektrode fließenden Elektrolyten auch umkehren, beispielsweise durch einen größer werdenden Spalt.

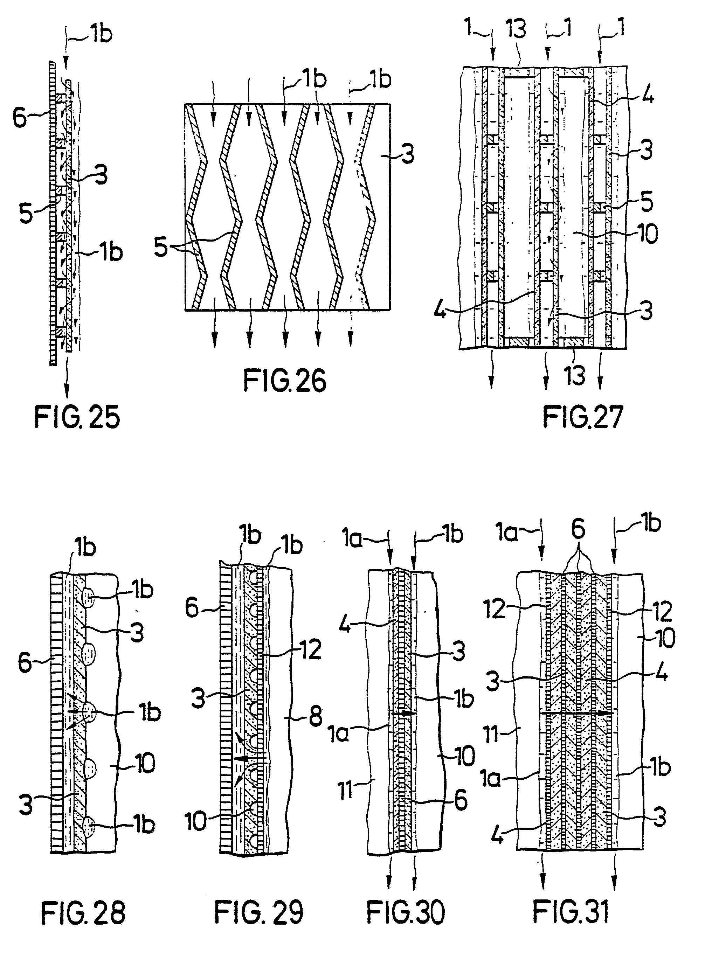

Wenn man dafür sorgt, daß die Rückseite der Gasdiffusionselektrode — wie bei Fig. 12 oder 28 beschriebenen — nur teilweise benetzt wird, so kann man diese Anordnung auch für gasverbrauchende Reaktionen einsetzen.

Es wäre noch anzumerken, daß mit dieser Anordnung nicht nur Reaktionen unter Beteiligung eines Gases durchgeführt werden können. Eine dicht an einer Trennwand oder Elektrode liegende, quer durchströmte poröse Elektrode ist für viele Prozesse interessant, bei denen mit Diffusionshemmung und großen Überspannungen gerechnet werden muß. In den Gasraum kann dann ein Inertgas eingeführt werden.

Fig. 25 zeigt eine Anordnung ohne Gegenelektrode, bei der der Elektrolyt 1b unter Richtungswechsel mehrfach quer durch die Gasdiffusionselektrode 3 strömt. Die Fig. 25 ist eine Varinate zu Fig. 24. Statt einer stetigen Drosselung sind mehrere, durch spezielle Abstandshalter 5 hervorgerufene, Drosselstellen eingebaut. Anstelle der Trennwand 6 kann auch eine Gegenelektrode eingesetzt werden.

Fig. 26 zeigt als Aufsicht eine besondere Ausführung der Abstandshalter 5. Hiermit wird eine ähnliche Wirkung erzielt, wie mit den quer verlaufenden streifenförmigen Abstandshaltern der Fig. 25. Die Drosselstelle wird in Fig. 26 durch stetige Verengung des Stömungsquerschnittes erreicht. Die Druckverhältnisse ändern sich nicht so abrupt wie in Fig. 25. Die Gasdiffusionselektrode 3 wird daher gleichmäßiger quer durchströmt.

Fig. 27 zeigt eine Anordnung von mehreren Einzelzellen nach dem Strömungsprinzip der Fig. 25. Dargestellt ist eine ungeteilte Zelle. Man kann aber auch Trennwände zwischen den beiden Gasdiffusionselektroden 3 und 4 anordnen. Die Anordnung kann elektrisch monopolar oder bipolar angeschlossen werden. Teil 13 ist eine elektronenleitende Kontaktbrücke. Der Stömungsverlauf des Elektrolyten 1 ist beispielshaft an einer Gasdiffusionselektrode 3 durch Pfeile angedeutet. Die Elektroden 3 und 4 haben einen gemeinsamen Gasraum 10. Der Elektrolyt 1 wird im Verlauf mehrfach durch Abstandshalter 5 gedrosselt. Die Anordnung ist bei bipolarer Schaltung besonders für solche Reaktionen geeignet, bei denen nur ein Gas gebildet wird, oder überhaupt kein Gas an der Reaktion beteiligt ist. Im letzteren Fall wird ein Inertgas eingeführt. Der Gasraum stellt einen guten Isolator dar. Man kann deshalb auch bei bipolarer Schaltung Elektrolyte mit guter Leitfähigkeit einsetzen, ohne daß ein elektrolytseitiger Kurzschluß wie bei den sogenannten bipolaren Partikelelektroden erfolgt. Durch Ausnutzung der großen inneren Oberflächen von Diffusionselektroden, verbunden mit kurzen Stromwegen, können sehr hohe Stomdichten erreicht werden.

Fig. 28 zeigt einen Horizontalschnitt ohne Gegenelektrode mit einer Trennwand 6 und einer Gasdiffusionselektrode 3. Der Elektrolyt 1b strömt im Spalt zwischen Trennwand 6 und Gasdiffusionselektrode 3 und teilweise in Strähnen auf der Rückseite der Gasdiffusionselektrode 3. Wenn man den Druck im Gasraum 10 höher einstellt als im Spalt zwischen Trennwand 6 und der Elektrode 3, so kann — wie mit Pfeilen angedeutet — ein Teil des Elektrolyten 1b quer durch die biporöse Gasdiffusionselektrode 3 fließen und so für einen Ausgleich von Konzentrationsunterschieden sorgen. Da die Rückseite der Gasdiffusionselektrode 3 teilweise elektrolytfrei ist, können auch gasverbrauchende Reaktionen durchgeführt werden.

Fig. 29 zeigt einen Horizontalschnitt ohne Gegenelektrode mit einer Trennwand 6 und einer Gasdiffusionselektrode 3. In die Gasdiffusionselketrode 3 sind Kanäle als Gasraum 10 eingearbeitet, in denen ein Gas zu- oder abgeführt werden kann. Ein Teil des Elektrolyten 1b fließt zwischen Trennwand 6 und der Gasdiffusionelektrode 3 und ein anderer Teil benetzt ein Kapillarsystem 12, beispielsweise ein Diaphragma. Durch eine aufgeprägte Druckdifferenz zwischen beiden Teilströmen kann man dafür sorgen, daß der Elektrolyt — wie mit Pfeilen angedeutet — in die eine oder andere Richtung fließt. Der Elektrolyt 1b, der das Kapillarsystem 12 benetzt, kann seitlichen Kontakt zu einem weiteren Gasraum 8 haben oder zwischen Kapillarsystem 12 und einer anderen, hier nicht dargestellten Wand fließen. Es kann vorteilhaft sein, die Strömungsquerschnitte gemäß den Ausführungen zu Fig. 24, 25 und 26 zu verändern.

Fig. 30 zeigt eine Anordnung mit zwei Gasdiffusionselektroden 3 und 4 und einer Trennwand 6. Die Elektrolyte 1a und 1b fließen auf der Rückseite der Gasdiffusionselektroden 3 und 4 und bedecken mindestens teilweise die Oberfläche. Stellt man zwischen den Gasräumen 10 und 11 eine Druckdifferenz ein und benutzt als Trennwand ein Diaphragma, so kann der Elektrolyt 1a — wie mit dem horizontalen Pfeil angedeutet — quer durch die Gasdiffusionselektroden 3 und 4 und die Trennwand 6 fließen. Da beispielsweise bei der alkalischen Wasser-Elektrolyse oder bei der Wasserstoff-Sauerstoff-Brennstoffzelle ohne quer fließenden Elektrolyten auf der einen Seite eine Aufkonzentrierung und auf der anderen Seite der Trennwand 6 eine Verdünnung erfolgen würde, kann der quer fließende Elektrolyt 1a eine Konzentrationsausgleich herbeiführen. Gleichzeitig wird damit ein Konzentrationsgefälle innerhalb der Gasdiffusionselektroden abgebaut. Ein Diffusionshemmung ist daher kaum zu erwarten. Durch die große Oberfläche, die nun aktiv am Prozeß teilnehmen kann, ist die Überspannung klein. Entstehende Gasblasen werden auf kürzestem Wege an die Phasengrenze zu den Gasräumen gebracht. Trotz hoher Stombelastung können damit sehr kompakte Zellen gebaut werden. Die Gasräume 10 und 11 brauchen nur wenige Millimeter tief zu sein.

Fig. 31 zeigt die Anwendung des erfindungsgmäßen Vorschlages auf ein sogenanntes ELO-FLUX-Zellenpaket. Dadurch kann man den auch auf das elektrolytführende Porensystem einwirkenden hydrostatischen Druck weitgehend beseitigen. Ein solches Paket besteht aus einer Vielzahl von Gasdiffusionselektroden 3 und 4 und Trennwänden 6, die als Diaphragma ausgebildet sind. Die entstehenden oder benötigten Reaktionsgase werden durch das gasführende Porensystem innerhalb der Gasdiffusionselektroden 3 und 4 transportiert. Zur Unterstützung des Gastransportes sind gegebenenfalls Kanäle in die Elektroden eingearbeitet, beispielsweise ähnlich wie in Fig. 29. Die beiden endständigen Gasdiffusionselektroden sind mit einem Kapillarsystem 12, beispielsweise einem Diaphragma abgedeckt. Das Kapillarsystem kann bei geeignet gestalteten Elektroden auch entfallen. Die Elektrolyten 1a und 1b fließen unter vollständiger Benetzung der beiden Kapillarsysteme 12 als offener Fallfilm nach unten.

Stellt man nun im Gasraum 11 einen höheren Druck als im Gasraum 10 ein, so fließt ein Teil des Elektrolyten 1a — wie durch den horizontalen Pfeil angedeutet — quer durch das Zellenpaket. Wie bereits an anderer Stelle erläutert, können die Elektrolyte 1a und 1b auch in einem engen Spalt zwischen festen Wänden fließen, beispielsweise an Elektroden, Diaphragmen oder den Abschlußplatten des Zellenpaketes. Die annähernde Druckgleichheit zwischen Ein- und Auslauf der Elektrolyte 1a und 1b läßt sich in diesem Fall beispielsweise durch Niveaugefäße einfach realisieren.

**Patentansprüche**

1. Verfahren zur elektrochemischen Behandlung von flüssigen Elektrolyten in ungeteilten oder durch mindestens eine Trennwand geteilten elektrochemischen Zellen mit mindestens einer Gasdiffusionselektrode mit seitlich in Fließrichtung des Elektrolyten angeordnetem Gasraum und mindestens einer Gegenelektrode, in dem man den Elektrolyten unter Ausnutzung der Schwerkraft in dünner Schicht so durch die elektrochemische Zelle fließen läßt, daß die Gasdiffusionselektrode mindestens teilweise davon benetzt wird.

2. Verfahren nach Anspruch 1, dadurch gekennzeichnet, daß der Elektrolyt zwischen Gasdiffusionselektrode und Gegenelektrode fließt.

3. Verfahren nach Anspruch 1, dadurch gekennzeichnet, daß der Elektrolyt zwischen Gasdiffusionselektrode und Trennwand fließt.

4. Verfahren nach Anspruch 1, in dem der Elektrolyt zwischen zwei Trennwänden fließt.

5. Verfahren nach Anspruch 1, in dem der Elektrolyt zwischen Trennwand und einer Gegenelektrode mit geschlossener Struktur fließt.

6. Verfahren nach Anspruch 1, dadurch gekennzeichnet, daß der Elektrolyt mindestens teilweise innerhalb der Trennwand fließt.

7. Verfahren nach Anspruch 1, dadurch gekennzeichnet, daß der Elektrolyt mindestens teilweise innerhalb der Gasdiffusionselektrode fließt.

8. Verfahren nach Anspruch 1, dadurch gekennzeichnet, daß der Elektrolyt mindestens teilweise auf der Rückseite der Gasdiffusionselektrode fließt.

9. Verfahren nach Anspruch 1, dadurch gekennzeichnet, daß man den Elektrolyten so fließen läßt, daß die Gasdiffusionselektrode vom Elektrolyten mindestens teilweise eingeschlossen wird.

10. Verfahren nach Anspruch 1, dadurch gekennzeichnet, daß der Elektrolyt in Kanälen fließt.

11. Verfahren nach Anspruch 1, dadurch gekennzeichnet, daß der Elektrolyt mindestens teilweise mäanderförmig fließt.

12. Verfahren nach Anspruch 1, dadurch gekennzeichnet, daß der Elektrolyt an einer hinter der Gasdiffusionselektrode angeordneten Wand herabfließt und die Gasdiffusionselektrode über ein Kapillarsystem benetzt wird.

13. Verfahren nach Anspruch 1, dadurch gekennzeichnet, daß man im Raum vor und hinter der Gasdiffusionselektrode ein unterschiedliches Druckniveau einstellt, und den Elektrolyten mindestens teilweise nach Maßgabe des Druckgefälles quer durch die Gasdiffusionselektrode fließen läßt.

14. Verfahren nach Anspruch 1, dadurch gekennzeichnet, daß man vor und hinter einem Zellenpaket, bestehend aus mindestens einer Gasdiffusionselektrode und mindestens einer Trennwand ein unterschiedliches Druckniveau einstellt, und den Elektrolyten mindestens teilweise quer durch das Zellenpaket fließen läßt.

15. Verfahren nach Anspruch 1, dadurch gekennzeichnet, daß die Gegenelektrode durchbrochen ist und man den Elektrolyten unter Ausnutzung der Schwerkraft so an der durchbrochenen Elektrode herabfließen läßt, daß seitlich zur Fließrichtung des Elektrolyten ein Gasraum entsteht.

16. Verfahren nach Anspruch 1, dadurch gekennzeichnet, daß die Gegenelektrode eine geschlossene Struktur aufweist und auf der Rückseite der Gegenelektrode ein Gasraum angeordnet ist und man den Elektrolyten unter Ausnutzung der Schwerkraft in dünner Schicht zwischen Gegenelektrode und Trennwand fließen läßt.

17. Verfahren nach Anspruch 1, dadurch gekennzeichnet, daß der Strömungsquerschnitt des Elektrolyten mindestens einmal verändert wird.

**Claims**

1. A process for electrochemical treatment of liquid electrolytes in electrochemical cells which are non-partitioned or are partitioned by at least one separator and have at least one gas diffusion electrode with a gas space located laterally to the direction of flow of the electrolyte and at least one counter-electrode, which comprises allowing the electrolyte to flow by means of gravity in a thin layer through the electrochemical cell in such a way that the gas diffusion electrode is at least partially wetted by it.

2. The process as claimed in claim 1, wherein the electrolyte flows between the gas diffusion electrode and the counter-electrode.

3. The process as claimed in claim 1, wherein the electrolyte flows between the gas diffusion electrode and the separator.

4. The process as claimed in claim 1, wherein the electrolyte flows between two separators.

5. The process as claimed in claim 1, wherein the electrolyte flows between the separator and a counter-electrode having a solid structure.

6. The process as claimed in claim 1, wherein the electrolyte flows at least partially within the separator.

7. The process as claimed in claim 1, wherein the electrolyte flows at least partially within the gas diffusion electrode.

8. The process as claimed in claim 1, wherein the electrolyte flows at least partially on the reverse side of the gas diffusion electrode.

9. The process as claimed in claim 1, wherein the electrolyte is caused to flow in such a manner that the gas diffusion electrode is at least partially enclosed by the electrolyte.

10. The process as claimed in claim 1, wherein the electrolyte flows in channels.

11. The process as claimed in claim 1, wherein the electrolyte flows at least partially in a meander pattern.

12. The process as claimed in claim 1, wherein the electrolyte flows downwards at a wall located behind the gas diffusion electrode, and the gas diffusion electrode is wetted via a capillary system.

13. The process as claimed in claim 1, wherein different pressures are set up in the space upstream and downstream of the gas diffusion electrode, and the electrolyte is caused to flow transversely through the gas diffusion electrode at least partially in accordance with the pressure gradient.

14. The process as claimed in claim 1, wherein different pressures are set up upstream and downstream of a stack of cells comprising at least one gas diffusion electrode and at least one separator, and the electrolyte is caused to flow at least partially transversely through the stack of cells.

15. The process as claimed in claim 1, wherein the counter-electrode is perforated and the electrolyte is caused to flow downwards by means of gravity at the perforated electrode in such a manner that a gas space is formed laterally to the direction of flow of the electrolyte.

16. The process as claimed in claim 1, wherein the counter-electrode has a solid structure, and a gas space is located on the reverse side of the counter-electrode, and the electrolyte is caused to flow, by means of gravity, in a thin layer between the counter-electrode and the separator.

17. The process as claimed in claim 1, wherein the cross-section of flow of the electrolyte is varied at least once.

**Revendications**

1. Procédé pour le traitement électrochimique d'électrolytes liquides dans des cellules électrochimiques, non subdivisées ou bien subdivisées par au moins une cloison séparatrice, comportant au moins une électrode à diffusion de gaz avec un espace pour gaz disposé latéralement par rapport à la direction d'écoulement de l'électrolyte, et comportant au moins une contre-électrode, dans lequel on laisse s'écouler en couche mince, sous l'effet de la gravité, les électrolytes dans la cellule électrochimique de manière que l'électrode à diffusion de gaz soit au moins partiellement mouillée par cette couche.

2. Procédé selon la revendication 1, caractérisé en ce que l'électrolyte circule entre une électrode à diffusion de gaz et une contre-électrode.

3. Procédé selon la revendication 1, caractérisé en ce que l'électrolyte circule entre une électrode à diffusion de gaz et une cloison séparatrice.

4. Procédé selon la revendication 1, dans lequel l'électrolyte circule entre deux cloisons séparatrices.

5. Procédé selon la revendication 1, dans lequel l'électrolyte circule entre une cloison séparatrice et une contre-électrode ayant une structure fermée.

6. Procédé selon la revendication 1, caractérisé en ce que l'électrolyte circule au moins partiellement à l'intérieur de la cloison séparatrice.

7. Procédé selon la revendication 1, caractérisé en ce que l'électrolyte circule au moins partiellement à l'intérieur de l'électrode à diffusion de gaz.

8. Procédé selon la revendication 1, caractérisé en ce que l'électrolyte circule au moins partiellement sur le côté arrière de l'électrode à diffusion de gaz.

9. Procédé selon la revendication 1, caractérisé en ce qu'on laisse les électrolytes circuler de manière que l'électrode à diffusion de gaz soit au moins partiellement emprisonnée par l'électrolyte.

10. Procédé selon la revendication 1, caractérisé en ce que l'électrolyte s'écoule dans des canaux.

11. Procédé selon la revendication 1, caractérisé en ce que l'électrolyte a un trajet d'écoulement au moins en partie sinueux.

12. Procédé selon la revendication 1, caractérisé en ce que l'électrolyte circule en trajet descendant sur une cloison disposée derrière l'électrode à diffusion de gaz et en ce que l'électrode à diffusion de gaz est mouillée grâce à un système de capillaires.

13. Procédé selon la revendication 1, caractérisé en ce qu'on crée, dans l'espace situé devant et celui situé derrière l'électrode à diffusion de gaz, un niveau différent de pression et en ce qu'on laisse au moins partiellement l'électrolyte circuler d'après la chute de pression, transversalement ou perpendiculairement à travers l'électrode à diffusion de gaz.

14. Procédé selon la revendication 1, caractérisé en ce qu'on crée une différence de niveau de pression devant et derrière un groupe ou paquet de cellules, consistant en au moins une électrode à diffusion de gaz et au moins une cloison séparatrice, et en ce qu'on laisse les électrolytes circuler à travers le groupe ou paquet de cellules.

15. Procédé selon la revendication 1, caractérisé en ce que la contre-électrode est ajourée et en ce qu'on laisse l'électrolyte circuler sous l'effet de la gravité, vers le bas sur l'électrode ajourée, de manière à obtenir, latéralement par rapport à la direction d'écoulement de l'électrolyte, un espace pour gaz.

16. Procédé selon la revendication 1, caractérisé en ce que la contre-électrode présente une structure fermée et en ce qu'il y a, sur le côté arrière de la contre-électrode, un espace pour gaz, et on laisse l'électrolyte circuler, sous l'effet de la pesenteur en couche mince entre la contre-électrode et une cloison séparatrice.

17. Procédé selon la revendication 1, caractérisé en ce que la section d'écoulement de l'électrolyte est modifiée au moins une fois.

FIG.1  FIG.2  FIG.3  FIG.4  FIG.5  FIG.6

FIG. 7

FIG. 8

FIG. 9

FIG. 10

FIG. 11

FIG. 12

FIG.13

FIG.14

FIG.15

FIG.16

FIG.17

FIG.18

FIG.19

FIG.20

FIG.21

FIG.23

FIG.22

FIG.24

FIG. 25

FIG.26

FIG.27

FIG. 28

FIG. 29

FIG.30

FIG.31